# EUROPEAN PATENT APPLICATION

(11) **EP 4 721 975 A1**
(43) Date of publication of application: **08.04.2026**
(21) Application number: 24815254.8
(22) Date of filing: 17.05.2024
(51) Int. Cl.: B32B 17/10, B32B 27/00, C03C 27/12

(54) **IMAGE-CARRYING LAMINATE, METHOD FOR MANUFACTURING SAME, INTERMEDIATE FILM FOR LAMINATED GLASS, AND LAMINATED GLASS**

(30) Priority: 29.05.2023 JP 2023088117
(71) Applicant: Sekisui Chemical Co., Ltd., Osaka-shi, Osaka 530-8565 (JP)
(72) Inventor: NAKAJIMA, Daisuke, 6041LE Roermond (NL); IZU, Yasuyuki, Mishima-gun, Osaka 618-0021 (JP); CLAESSEN, Mart, Dominique Theodor, 6041LE Roermond (NL)
(74) Representative: Ter Meer Steinmeister & Partner
(86) International application number: PCT/JP2024/018407
(87) International publication number: WO 2024/247770

(57) **Abstract**

Provided are: an image-carrying laminate not suffering interlayer delamination upon lamination processing or when used over time, and favorably maintaining the clarity and resolution of an image, a method for producing the same, an interlayer film for laminated glass, and laminated glass. A laminate for carrying an image is an image-carrying laminate 1A including: a first resin sheet 10; and an image-carrying layer 20 formed of a cured product of a curable ink; in which the image-carrying layer 20 has a first surface 20A and a second surface 20B opposite from the first surface, the first resin sheet 10 is stacked on the first surface 20A side, and the second surface 20B has been subjected to surface treatment by a surface treatment process.

## Description

### Technical Field

The present invention relates to an image-carrying laminate on which an image is carried, an interlayer film for laminated glass having an image-carrying laminate, and laminated glass.

### Background Art

Laminated glass is less prone to glass fragments flying off in the event of breakage by an external impact and therefore is safe, so that it has been widely used for glass in various vehicles such as automobiles, railway cars, aircraft and ships, and for glass in buildings and others. Laminated glass has been widely known which is obtained by interposing an interlayer film for laminated glass between a pair of glass members and integrating them, the interlayer film including a resin component such as a polyvinyl acetal resin or an ethylene-vinyl acetate copolymer resin.

In recent years, market demands for design of a glass structure such as laminated glass have been increasingly diverse. For example, in automotive applications, there has arisen a need and concept for applying design to a glass part according to the body design and body color. In architectural applications as well, there has arisen a continuing need for decorative glass for exterior and interior use.

Conventionally, it has been known to dispose a colored layer or a printed layer (image-carrying layer), or the like in a glass structure such as laminated glass to enhance design thereof. For example, as described in PTL1, it has been known to carry out printing by inkjet printing on a rigid thermoplastic intermediate layer to be included in an interlayer film to provide a printed layer for decoration.

### Citation List

### Patent Literature

PTL1: WO2004/011271

### Summary of Invention

### Technical Problem

However, when laminated glass has a configuration such that an image-carrying layer printed with a general ultraviolet ray-curable ink by inkjet printing is stacked on a thermoplastic hard interlayer film layer constituting an interlayer film, or a configuration such that an image-carrying resin layer after printing is sandwiched between thermoplastic hard interlayer film layers, the interlayer adhesiveness between the image-carrying layer and the interlayer film layer is insufficient. The insufficient interlayer adhesiveness between the image-carrying layer and the interlayer film layer arises the problem of interlayer delamination upon lamination processing or when used over time.

Then, an object of the present invention is to provide an image-carrying laminate not suffering interlayer delamination upon lamination processing or when used over time, and favorably maintaining the clarity and resolution of an image, a method for producing the same, an interlayer film for laminated glass, and laminated glass.

### Solution to Problem

The gist of the present invention is as follows:
[1] An image-carrying laminate for carrying an image, comprising:
   a first resin sheet; and an image-carrying layer formed of a cured product of a curable ink,
   the image-carrying layer having a first surface and a second surface opposite from the first surface, the first resin sheet being stacked on the first surface side of the image-carrying layer, the second surface of the image-carrying layer having been subjected to surface treatment by a surface treatment process.
[2] The image-carrying laminate according to [1], wherein the surface treatment by the surface treatment process is treatment for enhancing hydrophilicity of the second surface of the image-carrying layer.
[3] An image-carrying laminate for carrying an image, comprising:
   a first resin sheet; and an image-carrying layer formed of a cured product of a curable ink,
   the image-carrying layer having a first surface and a second surface opposite from the first surface, the first resin sheet being stacked on the first surface side of the image-carrying layer, the second surface of the image-carrying layer having an absorption peak at 3,200 to 3,700 cm⁻¹ as measured by a Fourier transform infrared spectrophotometer.
[4] The image-carrying laminate according to [1] or [3], comprising a second resin sheet laminated on the second surface side of the image-carrying layer.
[5] The image-carrying laminate according to any of [1] to [4], wherein the first resin sheet comprises any of a thermoplastic resin and a thermosetting resin.
[6] The image-carrying laminate according to any of [1] to [5], wherein the first resin sheet comprises a thermoplastic resin, and the thermoplastic resin is at least one selected from the group consisting of a polyvinyl butyral resin, an ethylene-vinyl acetate copolymer resin, a polyurethane resin, and a polyolefin resin.
[7] The image-carrying laminate according to [4], wherein the second resin sheet comprises a thermoplastic resin, and the thermoplastic resin is at least one selected from the group consisting of a polyvinyl butyral resin, an ethylene-vinyl acetate copolymer resin, a polyurethane resin, and a polyolefin resin.
[8] The image-carrying laminate according to any of [1] to [7], comprising a third resin sheet on a surface of the first resin sheet opposite from a surface of the first resin sheet on which the image-carrying layer is stacked.
[9] The image-carrying laminate according to any of [1] to [8], wherein the first resin sheet is at least one selected from the group consisting of a polyester film, a polyolefin film, a polyimide film, and an epoxy film.
[10] The image-carrying laminate according to [8], wherein the third resin sheet comprises any of a thermoplastic resin and a thermosetting resin.
[11] The image-carrying laminate according to [8], wherein the third resin sheet comprises a thermoplastic resin, and the thermoplastic resin is at least one selected from the group consisting of a polyvinyl butyral resin, an ethylene-vinyl acetate copolymer resin, a polyurethane resin, and a polyolefin resin.
[12] An interlayer film for laminated glass, comprising the image-carrying laminate according to any of [1] to [11].
[13] Laminated glass comprising the interlayer film for laminated glass according to [12].
[14] A method of producing an image-carrying laminate, comprising:
   a step of forming an image-carrying layer, the forming step comprising: providing a first resin sheet; carrying out printing with a curable ink on one surface side of the first resin sheet; and curing the curable ink; and
   a step of subjecting a second surface of the image-carrying layer to surface treatment by a surface treatment process, the second surface opposite from a first surface of the image-carrying layer on which the first resin sheet is stacked.
[15] The method for producing an image-carrying laminate according to [14], further comprising the step of stacking a second resin sheet on the second surface side of the image-carrying layer.

### Advantageous Effects of Invention

According to the present invention, there can be provided an image-carrying laminate not suffering interlayer delamination upon lamination processing or when used over time, and favorably maintaining the clarity and resolution of an image, a method for producing the same, an interlayer film for laminated glass, and laminated glass.

### Brief Description of Drawings

[Fig. 1] Fig. 1 is a schematic cross-sectional view (No. 1) illustrating the image-carrying laminate according to the first embodiment.
[Fig. 2] Fig. 2 is a schematic cross-sectional view (No. 2) illustrating the image-carrying laminate according to the first embodiment.
[Fig. 3] Fig. 3 is a schematic cross-sectional view (No. 1) illustrating the image-carrying laminate according to the second embodiment.
[Fig. 4] Fig. 4 is a schematic cross-sectional view (No. 2) illustrating the image-carrying laminate according to the second embodiment.
[Fig. 5] Fig. 5 is a graph showing the results of measurement, using a Fourier transform infrared spectrophotometer, on the second surface of an image-carrying layer of the image-carrying laminates of Example 1 and Comparative Example 1, the image-carrying layer including an ultraviolet ray-cured cyan ink.

### Description of Embodiments

The present invention will be described below by way of embodiments.

### (First embodiment)

### [Image-carrying laminate]

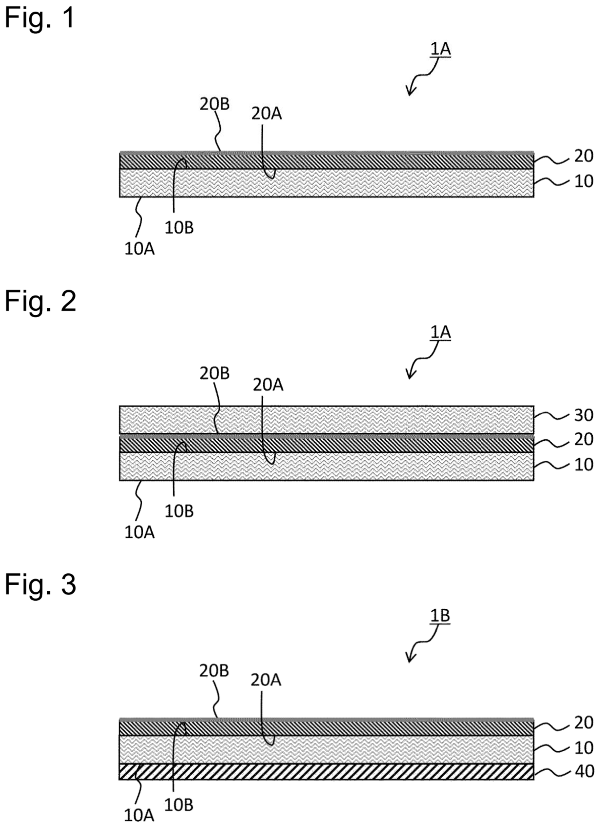

As shown in Fig. 1, the image-carrying laminate according to the first embodiment of the present invention is an image-carrying laminate 1A carrying an image, and includes a first resin sheet 10 and an image-carrying layer 20 formed of a cured product of a curable ink. The image-carrying layer 20 has a first surface and a second surface opposite from the first surface, the first resin sheet 10 is stacked on the first surface 20A side of the image-carrying layer 20, and the second surface 20B has been surface-treated by a surface treatment process. In the present invention, the surface treatment on the second surface 20B of image-carrying layer 20 by a surface treatment process allows image-carrying layer 20 not to suffer interlayer delamination upon lamination processing or when used over time, and to favorably maintain the clarity and resolution of an image.

As shown in Fig. 1, image-carrying laminate 1A may include at least the first resin sheet 10. As shown in Fig. 2, it is preferable that image-carrying laminate 1A should be configured to include a second resin sheet 30 stacked on the second surface 20B side of image-carrying layer 20.

### <Image-carrying layer>

Image-carrying layer 20 is a layer (site) for carrying a formed image in image-carrying laminate 1A. As described above, the surface treatment on the second surface 20B of image-carrying layer 20 by a surface treatment process allows image-carrying layer not to suffer interlayer delamination upon lamination processing or when used over time, and to favorably maintain the clarity and resolution of an image. The surface treatment by a surface treatment process as employed herein is preferably treatment that enhances the hydrophilicity of the second surface 20B of image-carrying layer 20. Enhancing the hydrophilicity of the second surface 20B of image-carrying layer 20 makes it possible to enhance the affinity of image-carrying layer 20 to another layer, to enhance the adhesive strength, and to inhibit interlayer delamination from occurring. For example, in the case of disposing a second resin sheet 30 on the second surface 20B, image-carrying layer 20 has enhanced affinity with the second resin sheet 30, and this favorably enhances the adhesive strength between image-carrying layer 20 and the second resin sheet 30, making it possible to inhibit interlayer delamination from occurring.

The surface treatment by a surface treatment process may be any treatment capable of modifying the second surface 20B of image-carrying layer 20 to enhance its hydrophilicity, and examples thereof include ozone treatment such as UV ozone treatment, plasma treatment, corona treatment, peroxide treatment, and coating treatment. Of these, UV ozone treatment is preferred. The UV ozone treatment is a method for hydrophilizing image-carrying layer 20 by using the energy of short-wavelength ultraviolet rays and ozone (O₃) generated thereby.

Image-carrying layer 20 is formed of a cured product of a curable ink. The curable ink may be any ink that is to be cured by heating or irradiation with active energy rays. Herein, examples of the active energy rays include visible light, ultraviolet rays, infrared rays, X-rays, alpha rays, beta rays, and gamma rays. Also, the curable ink preferably contain a binder resin which is a curable resin. Of the inks described above, an active energy ray-curable ink is preferred, and an ultraviolet ray-curable ink is particularly more preferred.

In the case in which the curable ink is an ultraviolet ray-curable ink, the curable ink preferably contains, as a curable binder resin component, a polymerizable compound that can be cured by active energy rays as a curable resin. As the polymerizable compound, any known compound used for an ultraviolet ray-curable ink may be used, and an acrylate-based compound is preferable.

The acrylate-based compound is a compound having a (meth)acryloyl group, and may be a monofunctional acrylate compound, which has one (meth)acryloyl group; however, the acrylate-based compound preferably includes a polyfunctional acrylate compound, which at least has two or more (meth)acryloyl groups. The use of polyfunctional acrylate compound facilitates appropriately curing image-carrying layer 20.

The polyfunctional acrylate compound may be any of a diacrylate compound, which has two (meth)acryloyl groups, and a polyfunctional acrylate compound, which has three or more (meth)acryloyl groups. The acrylate-based compound contained in ink preferably includes a polyfunctional acrylate compound, which has three or more (meth)acryloyl groups. Using the polyfunctional acrylate compound having three or more (meth)acryloyl groups can produce, as image-carrying layer 20, a cross-linked product having a three-dimensional network structure. This enhances the mechanical strength of image-carrying layer 20, and making it difficult for the material constituting image-carrying layer 20 to migrate to other layers.

As the polymerizable compound, a hydroxyl group-containing monomer or a carboxyl group-containing monomer may be used. As the hydroxyl group-containing monomer, a hydroxy-containing (meth)acrylate such as 2-hydroxyethyl (meth)acrylate can be used. As the carboxyl group-containing monomer, acrylic acid, methacrylic acid, maleic acid, fumaric acid, and itaconic acid, can be used, for example. Any of these hydroxyl group-containing monomers and carboxyl group-containing monomers is preferably used in combination with an acrylic-based compound that is different from the hydroxyl group-containing monomer and carboxyl group-containing monomer.

Using the hydroxyl group-containing monomer or carboxyl group-containing monomer as the acrylate-based compound can enhance the hydrophilicity of the second surface 20B of image-carrying layer 20 without surface treatment, resulting in favorable adhesive strength between image-carrying layer 20 and the second resin sheet 30 to inhibit interlayer delamination.

Image-carrying layer 20 is preferably formed of an ultraviolet ray-curable ink containing a coloring material. Image-carrying layer 20 formed of an ultraviolet ray-curable ink containing a coloring material contains the coloring material to form an image.

The coloring material used for image-carrying layer 20 may be a known pigment or dye. A colorant may be pigments such as blue, yellow, red, green, purple, white, and black pigments. The coloring material may be used singly or in combination of two or more thereof.

The coloring material is preferably a coloring material that is colored by selectively absorbing visible light, but is not limited to such coloring materials. It is also possible to use light-emitting material that is called a fluorescent material and emits visible light when irradiated with excitation light. The fluorescent material (light-emitting material) may be a material that emits so-called phosphorescence when irradiated with excitation light.

The maximum emission wavelength (maximum excitation wavelength) of the excitation light is preferably, but not particularly limited to, 420 nm or less, more preferably 410 nm or less, and still more preferably 408 nm or less. It is also preferably 300 nm or more, more preferably 350 nm or more, and still more preferably 380 nm or more. The maximum emission wavelength of excitation light that is equal to or more than the above-described lower limit and equal to or less than the above-described upper limit allows the light-emitting material to efficiently emit visible light by the excitation light.

The light-emitting material that can be used in image-carrying layer 20 may be, for example, a lanthanoid complex, a light-emitting material having a terephthalic acid ester structure, a light-emitting material having a naphthalimide backbone, a light-emitting material having a coumarin backbone, or a light-emitting material having a quinoline backbone. The light-emitting materials may be used singly or in combination of two or more thereof. Combination of a plurality of light-emitting materials having different emission wavelengths enables not only a monochromatic image but also an image with combination of various colors to be displayed. Of the light-emitting materials described above, the lanthanoid complex or the light-emitting material having a terephthalic acid ester structure is preferable, and the light-emitting material having a terephthalic acid ester structure is more preferable.

Examples of the compound having a terephthalate backbone include a compound having a diterephthalic acid ester structure, and examples thereof include a compound having a structure represented by the following formula (1) and a compound having a structure represented by the following formula (2). These may be used singly or in combination of two or more thereof. 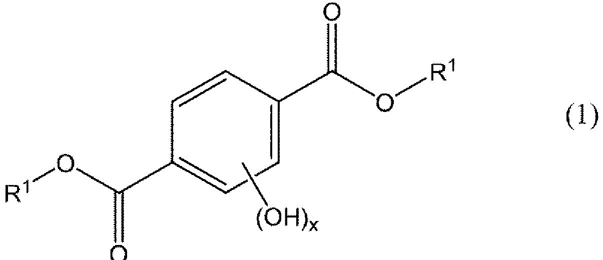 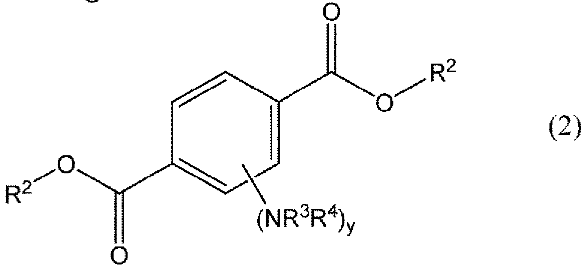 wherein, R¹ represents an organic group, and x is 1, 2, 3, or 4.

In view of enhancing the transparency of image-carrying layer 20, x is preferably 1 or 2, and the compound more preferably has a hydroxyl group at the 2-position or 5-position of the benzene ring, and still more preferably has hydroxyl groups at the 2-position and 5-position of the benzene ring.

The organic group of R¹ is preferably a hydrocarbon group, more preferably a hydrocarbon group having 1 to 10 carbon atoms, still more preferably a hydrocarbon group having 1 to 5 carbon atoms, and particularly preferably a hydrocarbon group having 1 to 3 carbon atoms. When the hydrocarbon group has 10 or less carbon atoms, the above-described fluorescent material having a terephthalate backbone can be easily dispersed or dissolved in ink. The hydrocarbon group is preferably an alkyl group. In formula (1), the two R¹ groups may be the same or different from each other.

Examples of the compound having a structure represented by formula (1) above include diethyl-2,5-dihydroxyterephthalate, and dimethyl-2,5-dihydroxyterephthalate. Among these, the compound having a structure represented by the general formula (1) above is preferably diethyl-2,5-dihydroxyl terephthalate ("diethyl 2,5-dihydroxyterephthalate" manufactured by Sigma-Aldrich Co. LLC).

In formula (2) above, R² represents an organic group, R³ and R⁴ represent a hydrogen atom or an organic group, and y is 1, 2, 3, or 4.

The organic group of R² is preferably a hydrocarbon group, more preferably a hydrocarbon group having 1 to 10 carbon atoms, still more preferably a hydrocarbon group having 1 to 5 carbon atoms, and particularly preferably a hydrocarbon group having 1 to 3 carbon atoms. When the hydrocarbon has the number of carbon atoms equal to or less than the above-described upper limit, the fluorescent material having a terephthalate backbone described above can be easily dispersed or dissolved in ink. The hydrocarbon group is preferably an alkyl group. In formula (2), the two R¹ groups may be the same or different from each other.

In the general formula (2) above, NR³R⁴ is an amino group. Preferably, R³ and R⁴ are each independently a hydrocarbon group having 1 to 10 carbon atoms or a hydrogen atom. The hydrocarbon group is more preferably a hydrocarbon group having 1 to 5 carbon atoms and still more preferably a hydrocarbon group having 1 to 3 carbon atoms. Each of the hydrocarbon groups of R³ and R⁴ are preferably alkyl groups. R³ and R⁴ may be bonded to form a ring. When R³ and R⁴ form a ring, the total number of carbon atoms thereof is preferably 2 to 6 and more preferably 2 to 5. An example of the ring is azetidine.

In the compound having the structure represented by the general formula (2) above, y is preferably 2. In formula (2), when there are two or more NR³R⁴ groups in one molecule, the two or more NR³R⁴ groups may be the same or different from each other.

Preferred examples of the compound having the structure represented by the general formula (2) above include diethyl-2,5-diaminoterephthalate (manufactured by Sigma-Aldrich Co. LLC, for example), dimethyl-2,5-bis(dimethylamino)terephthalate, and diethyl-2,5-bis(azetidin-1-yl)terephthalate.

In addition to the binder resin and the coloring material, the ultraviolet ray-curable ink may appropriately contain other known components used for ink, and can appropriately contain a component that is contained in conventional ultraviolet ray-curable inks, such as a sensitizer, a dispersant, a leveling agent, an antifoaming agent, a surface conditioner, or a photopolymerization initiator. The ultraviolet ray-curable ink may be solvent-free, or may contain an organic solvent or the like, if necessary.

Image-carrying layer 20 is preferably a printed layer formed by printing and it is more preferably formed by printing on the other surface 10B of the first resin sheet 10.

Image-carrying layer 20 may be formed on the whole of the surface of image-carrying laminate 1A by carrying out so-called solid printing. However, it is preferable that image-carrying layer 20 should be printed in a predetermined image shape such as a pictorial pattern such as a picture, a pattern, or an icon, a character, or a combination thereof, and thus should be partially formed on a region of image-carrying laminate 1A. In a case in which image-carrying layer 20 is printed in a predetermined image shape, the quality of the image is significantly reduced when the resolution and clarity of the image are reduced. However, as described above, the surface treatment on the second surface 20B of image-carrying layer 20 by a surface treatment process can inhibit interlayer delamination of image-carrying layer 20. Thus, due to the surface treatment on the second surface 20B of image-carrying layer 20 by a surface treatment process, image-carrying layer 20 does not suffer interlayer delamination and favorably maintains the clarity and resolution of an image, thereby appropriately inhibiting deterioration in its image quality.

The thickness of image-carrying layer 20 is preferably, but not particularly limited to, 0.5 µm or more and 70 µm or less, more preferably 1 µm or more and 50 µm or less, and still more preferably 5 µm or more and 30 µm or less. Image-carrying layer 20 having a thickness equal to or more than the above-described lower limit can appropriately display an image. Image-carrying layer 20 having a thickness equal to or less than the above-described upper limit can prevent formation of large convex and concave portions in image-carrying laminate 1A resulting from image-carrying layer 20 formed only in a part of image-carrying laminate 1A. Image-carrying layer 20 having a thickness equal to or less than the above-described upper limit also can prevent a larger thickness of image-carrying laminate 1A than necessary.

In one aspect, the second surface 20B of image-carrying layer 20 has an absorption peak at 3,200 to 3,700 cm⁻¹ as measured by a Fourier transform infrared spectrophotometer. When the second surface 20B of image-carrying layer 20 has an absorption peak within the above-described range as measured by a Fourier transform infrared spectrophotometer, a hydroxyl group is present in the molecular structure constituting the second surface 20B, leading to favorable hydrophilicity of the second surface 20B. In other words, the second surface 20B of image-carrying layer 20 having an absorption peak within the above-described range as measured by a Fourier transform infrared spectrophotometer has enhanced affinity with the second resin sheet 30 to impart favorable adhesive strength between image-carrying layer 20 and the second resin sheet 30, making it possible to inhibit interlayer delamination from occurring.

Examples of means to make the second surface 20B of image-carrying layer 20 to have an absorption peak within the above-described range as measured by a Fourier transform infrared spectrophotometer include surface treatment by the above-described surface treatment process, and incorporating a component having a hydroxyl group and a carboxyl group into the curable ink for forming image-carrying layer 20. In order to have an absorption peak within the above-described range as measured by a Fourier transform infrared spectrophotometer, one of these means may be used, or the two means may be used in combination. Therefore, in one aspect of the present invention, the second surface may not be necessarily surface treated by a surface treatment process.

### <First resin sheet and second resin sheet>

As described above, image-carrying laminate 1A of the present invention includes at least one resin sheet (the first resin sheet 10). Image-carrying laminate 1A of the present invention preferably includes at least two resin sheets (the first resin sheet 10 and second resin sheet 30) as shown in Fig. 2. The resin sheets (the first resin sheet 10 and second resin sheet 30) included allow image-carrying layer 20 to be disposed between a pair of substrates, and therefore appropriately facilitates adhesion of both sides of image-carrying laminate 1A to other members via the resin sheets (the first resin sheet 10 and second resin sheet 30). This makes image-carrying laminate 1A to be suitably used as an interlayer film for laminated glass.

The resin sheets (the first resin sheet 10 and second resin sheet 30) are preferably used as substrate layers for holding image-carrying layer 20. Also, the resin sheets (the first resin sheet 10 and second resin sheet 30) may serve as adhesive layers for allowing image-carrying laminate 1A to adhere to other members such as glass members. Therefore, the first resin sheet 10 is preferably disposed on one surface of image-carrying laminate 1A. Also, when the second resin sheet 30 is disposed, the second resin sheet 30 is preferably disposed on the other surface (the surface opposite from the above-described one surface) of image-carrying laminate 1A. The resin sheets (the first resin sheet 10 and second resin sheet 30) disposed on the respective surfaces of image-carrying laminate 1A can be appropriately used as adhesive layers for allowing image-carrying laminate 1A to adhere to other members.

A resin used for the first resin sheet 10 is preferably any of a thermoplastic resin and a thermosetting resin, and more preferably a thermoplastic resin among them. A resin used for the second resin sheet 30 is preferably any of a thermoplastic resin and a thermosetting resin, and more preferably a thermoplastic resin among them. Therefore, the resins used for the resin sheets (the first resin sheet 10 and second resin sheet 30) are all more preferably thermoplastic resins. The resin sheets (the first resin sheet 10 and second resin sheet 30) each containing a thermoplastic resin are likely to function as adhesive layers and have favorable adhesiveness with a glass plate (glass member).

Examples of the thermoplastic resin in each resin sheet (the first resin sheet 10 and second resin sheet 30) include, but not particularly limited to, a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. Using any of these resins is likely to ensure adhesiveness to a glass plate.

In each resin sheet in the present invention, the thermoplastic resins may be used singly or in combination of two or more thereof.

Among the resins described above, preferred is at least one selected from the group consisting of a polyvinyl acetal resin, an ethylene-vinyl acetate copolymer resin, a polyurethane resin, and a polyolefin resin. In terms of exhibiting excellent adhesiveness to glass particularly when combined for use with a plasticizer, the polyvinyl acetal resin, particularly the polyvinyl butyral resin, is more preferable.

Examples of the thermosetting resin in each resin sheet (the first resin sheet 10 and second resin sheet 30) include, but not particularly limited to, an epoxy resin, a phenol resin, a melamine resin, an unsaturated polyester resin, a urea resin, and a silicone resin. Using these resins is likely to ensure adhesiveness to a glass plate.

The resin for constituting the resin sheets (the first resin sheet 10 and second resin sheet 30) may be appropriately selected from the resins listed above. The resins constituting the respective resin sheets (the first resin sheet 10 and second resin sheet 30) may be different from each other, but is preferably the same.

In a case in which the first resin sheet 10 and the second resin sheet 30 are disposed, it is preferable that both resins used in the first resin sheet 10 and the second resin sheet 30 should be at least one selected from the group consisting of a polyvinyl acetal resin, an ethylene-vinyl acetate copolymer resin, a polyurethane resin, and a polyolefin resin.

### <<Polyvinyl acetal resin>>

The polyvinyl acetal resin is not particularly limited as long as it is a polyvinyl acetal resin obtained by acetalizing polyvinyl alcohol (PVA) with an aldehyde.

The aldehyde is not particularly limited, but generally, aldehyde having 1 to 10 carbon atoms is suitably used. Examples of the aldehyde having 1 to 10 carbon atoms include, but not particularly limited to, n-butylaldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used singly or in combination of two or more thereof.

Among those described above, n-butylaldehyde, n-hexylaldehyde, and n-valeraldehyde are preferred, and n-butylaldehyde is more preferred. Therefore, the polyvinyl acetal resin is suitably a polyvinyl butyral resin (PVB). The polyvinyl butyral resin (PVB) may be modified or unmodified.

The polyvinyl alcohol (PVA) can be obtained by saponifying polyvinyl ester such as polyvinyl acetate. The degree of saponification of polyvinyl alcohol is generally 70 to 99.9 mol%. The polyvinyl acetal resins may be used singly or in combination of two or more thereof.

The average degree of polymerization of PVA is preferably 200 or more, more preferably 500 or more, still more preferably 1,000 or more, and yet more preferably 1,500 or more. The average degree of polymerization equal to or more than the above-described lower limit enhances the penetration resistance of laminated glass. The average degree of polymerization of PVA is preferably 5,000 or less, more preferably 4,000 or less, still more preferably 3,500 or less, and yet more preferably 2,500 or less.

The average degree of polymerization of polyvinyl alcohol is determined by the method in accordance with JIS K 6726 "Testing methods for polyvinyl alcohol."

The amount of the hydroxyl group in the polyvinyl acetal resin is preferably 15 to 38 mol%, more preferably 20 to 35 mol%, still more preferably 25 to 33 mol%, and yet more preferably 32 to 80 mol%. The amount of the hydroxyl group equal to or more than the above-described lower limit is likely to give favorable adhesiveness and also to impart favorable penetration resistance and other properties to laminated glass. Furthermore, the amount of the hydroxyl group equal to or less than the above-described upper limit prevents laminated glass from being too hard.

In the case of also using a polyvinyl butyral resin as the polyvinyl acetal resin, the amount of the hydroxyl group in the polyvinyl butyral resin is preferably 15 to 38 mol%, more preferably 20 to 35 mol%, still more preferably 25 to 33 mol%, and yet more preferably 32 to 80 mol%, from the same viewpoint as above.

The amount of the hydroxyl group in the polyvinyl acetal resin is a molar fraction in percentage terms, which is calculated by dividing the amount of ethylene groups having a hydroxyl group bonded thereto by the total amount of ethylene groups in the main chain. The amount of ethylene group having a hydroxyl group bonded thereto can be measured, for example, in accordance with JIS K 6728 "Testing methods for polyvinyl butyral."

The degree of acetalization of the polyvinyl acetal resin is preferably 47 to 85 mol%, more preferably 55 to 80 mol%, and still more preferably 60 to 75 mol%. The degree of acetalization equal to or more than the above-described lower limit enhances transparency. The degree of acetalization equal to or less than the above-described upper limit enhances the moisture resistance of the image-carrying laminate and laminated glass.

The degree of acetalization means a degree of butyralization when an acetal group is a butyral group and the polyvinyl acetal resin is a polyvinyl butyral resin.

The degree of acetalization is a molar fraction in percentage terms, which is determined by subtracting the amount of ethylene group having a hydroxyl group bonded thereto and the amount of ethylene group having an acetyl group bonded thereto, from the total amount of ethylene groups in the main chain, and dividing the resulting value by the total amount of ethylene group in the main chain. The degree of acetalization (degree of butyralization) may be calculated from results obtained by measurement in accordance with, for example, JIS K 6728 "Testing methods for polyvinyl butyral."

The degree of acetylation of the polyvinyl acetal resin is preferably 30 mol% or less, more preferably 20 mol% or less, still more preferably 10 mol% or less, and yet more preferably 2 mol% or less. The degree of acetylation equal to or less than the above-described upper limit enhances the moisture resistance of the first resin sheet 10 and the second resin sheet 30. The degree of acetylation is preferably 0.01 mol% or more, and more preferably 0.1 mol% or more, but not particularly limited thereto.

The degree of acetylation is a molar fraction in percentage terms, which is determined by dividing the amount of ethylene group having an acetyl group bonded thereto by the total amount of ethylene groups in the main chain. The amount of ethylene group having an acetyl group bonded thereto can be measured, for example, in accordance with JIS K 6728 "Testing methods for polyvinyl butyral."

### <<Ethylene-vinyl acetate copolymer resin>>

The ethylene-vinyl acetate copolymer resin may be a non-crosslinked ethylene-vinyl acetate copolymer resin or a high-temperature crosslinked ethylene-vinyl acetate copolymer resin. Ethylene-vinyl acetate modified resins such as a saponified product of an ethylene-vinyl acetate copolymer and a hydrolysate of an ethylene-vinyl acetate can also be used as the ethylene-vinyl acetate copolymer resins.

The ethylene-vinyl acetate copolymer resin preferably has a vinyl acetate content of 10 to 50% by mass and more preferably 20 to 40% by mass, as measured in accordance with JIS K 6730 "Testing methods for ethylene-vinyl acetate resin" or JIS K 6924-2:1997. The vinyl acetate content equal to or more than the lower limit enhances adhesiveness to glass, and is likely to result in favorable penetration resistance of laminated glass. The vinyl acetate content equal to or less than the upper limit enhances the strength at break of the image-carrying laminate, and results in the favorable impact resistance of laminated glass.

### <<Polyurethane resin>>

Examples of the polyurethane resin include polyurethane obtained by reacting an isocyanate compound with a diol compound, and polyurethane obtained by reacting an isocyanate compound with a diol compound and further with a chain extender such as polyamine. Also, the polyurethane resin may be those containing a sulfur atom, and in that case, preferably, the diol is partially or totally selected from the group consisting of polythiol and sulfur-containing polyol. The polyurethane resin provides favorable adhesiveness to organic glass. Therefore, it is suitably used in the case of the organic glass of a laminated glass member.

### <<Polyolefin resin>>

Examples of the polyolefin resin include a polyethylene resin, a polypropylene resin, a polybutene resin, a poly(4-methylpentene-1) resin, and a cycloolefin resin.

### <<Plasticizer>>

In the case in which each resin sheet (the first resin sheet 10 and second resin sheet 30) contains a thermoplastic resin, the sheet preferably further contains a plasticizer. That is, the first resin sheet 10 preferably contains a thermoplastic resin and a plasticizer. In the case in which the second resin sheet 30 is disposed, it also preferably contains a thermoplastic resin and a plasticizer.

The first resin sheet 10 and second resin sheet 30 each containing a plasticizer are flexible, whereby image-carrying laminate 1A is flexible as well. Also, when used as an interlayer film for laminated glass, image-carrying laminate 1A enhances the flexibility as well as the penetration resistance of laminated glass. Furthermore, such first resin sheet 10 and second resin sheet 30 can exhibit high adhesiveness to a glass plate.

In the case in which a polyvinyl acetal resin is used as a thermoplastic resin, the plasticizer particularly effectively works when contained in each resin sheet. Therefore, the first resin sheet 10 more preferably contains a polyvinyl acetal resin and a plasticizer. Also, the second resin sheet 30 more preferably contains a polyvinyl acetal resin and a plasticizer.

Examples of the plasticizer include organic ester plasticizers such as monobasic organic acid ester and polybasic organic acid ester as well as phosphorus-based plasticizers such as an organic phosphate-based plasticizer and an organic phosphite-based plasticizer. Of these, the organic ester plasticizer is preferable.

Examples of the organic ester plasticizer include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, oil-modified sebacic alkyd, a mixture of phosphoric acid ester and adipic acid ester, and mixed adipic acid ester. Examples of the mixed adipic acid ester include adipic acid ester produced from two or more alcohols selected from the group consisting of alkyl alcohol having 4 to 9 carbon atoms and cyclic alcohol having 4 to 9 carbon atoms.

Among the plasticizers described above, triethylene glycol-di-2-ethylhexanoate (3GO) is particularly suitable for use.

The plasticizer content in each of the resin sheets (the first resin sheet 10 and second resin sheet 30) is preferably, but not particularly limited to, 10 parts by mass or more and 100 parts by mass or less relative to 100 parts by mass of a thermoplastic resin. A plasticizer content of 10 parts by mass or more results in moderately flexible image-carrying laminate 1A, and therefore, using image-carrying laminate 1A as an interlayer film for laminated glass results in the favorable penetration resistance and other properties of laminated glass. A plasticizer content of 100 parts by mass or less prevents separation of the plasticizer from the resin sheets (the first resin sheet 10 and second resin sheet 30). The plasticizer content is more preferably 20 parts by mass or more, still more preferably 30 parts by mass or more, yet more preferably 35 parts by mass or more, and more preferably 70 parts by mass or less and still more preferably 63 parts by mass or less.

The resin sheets (the first resin sheet 10 and second resin sheet 30) are each mainly composed of a resin, or a resin and a plasticizer. The total amount of thermoplastic resin and plasticizer in each of the resin sheets (the first resin sheet 10 and second resin sheet 30) is usually 70% by mass or more and 100% by mass or less, preferably 80% by mass or more and 100% by mass or less, and more preferably 90% by mass or more and 100% by mass or less, based on the total amount of each resin sheet. However, in general, the resin sheets (the first resin sheet 10 and second resin sheet 30) often contain an additive as described later, so that the total amount of thermoplastic resin and plasticizer may be less than 100% by mass.

Each of the resin sheets (the first resin sheet 10 and second resin sheet 30) of the present invention may appropriately contain various additives such as a heat shielding agent, an ultraviolet ray absorber, an antioxidant, a light stabilizer, an ultraviolet ray absorber, and an antioxidant.

A thickness of each of the resin sheets (the first resin sheet 10 and second resin sheet 30) is not particularly limited, and is, for example, 50 µm or more and 1,000 µm or less, preferably 100 µm or more and 800 µm or less, and more preferably 200 µm or more and 500 µm or less. The resin sheets (the first resin sheet 10 and second resin sheet 30) having a thickness within the above-described range can appropriately support image-carrying layer 20 by the resin sheets (the first resin sheet 10 and second resin sheet 30) without a larger thickness of image-carrying laminate 1A than necessary, and facilitates adhesion of image-carrying laminate 1A to another member such as a laminated glass member.

### [Method for producing image-carrying laminate]

An example of the method for producing an image-carrying laminate 1A according to the first embodiment will be described below.

The method for producing an image-carrying laminate 1A according to the first embodiment includes, first, the step of forming an image-carrying layer 20, the forming step including providing a first resin sheet 10, carrying out printing with a curable ink on the other surface 10B side of the first resin sheet 10, and curing the curable ink. Image-carrying layer 20 may be partially disposed on the other surface 10B of the first resin sheet 10, or may be disposed on the whole of the other surface 10B of the first resin sheet 10. The method of printing with the curable ink is not particularly limited, and examples thereof include screen printing, inkjet printing, flexographic printing, and offset printing. And among these, inkjet printing is preferred. In the case of using an ultraviolet ray-curable ink as the curable ink, the ultraviolet ray-curable ink that underwent printing for coating is irradiated with ultraviolet rays to be cured to thereby form an image-carrying layer 20.

Next, the second surface 20B of image-carrying layer 20 opposite from the first surface 20A side thereof on which the first resin sheet 10 is stacked, is subjected to surface treatment by the surface treatment process as described above.

In the case of image-carrying laminate 1A configured to include the second resin sheet 30 on the second surface 20B side of image-carrying layer 20, the second resin sheet 30 may be stacked on the second surface 20B side of image-carrying layer 20 after the surface treatment by the surface treatment process.

The method for stacking the second resin sheet 30 is not particularly limited, and any known method may be used. A lamination method may be used. In the lamination method, a thermoplastic resin may be stacked by extrusion on the second surface 20B of image-carrying layer 20 that has been subjected to surface treatment by a surface treatment process, to form the second resin sheet 30. Alternatively, a thermoplastic resin preliminarily formed into a film may be stacked by pressing or the like on the second surface 20B of image-carrying layer 20 that has been subjected to surface treatment by a surface treatment process to form the second resin sheet 30. Any other known lamination methods may be employed.

Proceeding with the steps described above, image-carrying laminate 1A shown in Fig. 1 and Fig. 2 can be obtained.

In the present production method, which includes subjecting a surface of image-carrying layer 20 to surface treatment by a surface treatment process, image-carrying layer 20 has not been caused to suffer interlayer delamination and has favorably maintained the clarity and resolution of an image.

The present production method, which includes forming image-carrying layer 20 by printing, facilitates image depiction in various shapes by the image-carrying layer 20, so that an image-carrying laminate 1A with a higher level of design can be easily obtained.

The production method described above is one example for obtaining image-carrying laminate 1A according to the first embodiment, and the method for producing image-carrying laminate 1A according to the first embodiment is not limited to the above-described method. Also, in one mode of the first embodiment, surface treatment by a surface treatment process may be omitted in the case in which a curable ink to be used contains a component having a hydroxyl group and a carboxyl group to allows the second surface 20B to have an absorption peak at 3,200 to 3,700 cm⁻¹ as measured by a Fourier transform infrared spectrophotometer.

### <Method for using image-carrying laminate>

Image-carrying laminate 1A can be used for various applications, and is preferably used as an adhesive sheet that adheres to another member via the first resin sheet 10, or the first resin sheet 10 and the second resin sheet 30 when used. Herein, the other member to which image-carrying laminate 1A of the present invention adheres is preferably a glass member. The glass member is preferably a glass plate. A specific example of the glass plate is the same as a glass plate to be used for a laminated glass member described later.

### [Interlayer film for laminated glass]

Image-carrying laminate 1A is preferably used in an interlayer film for laminated glass. Image-carrying laminate 1A may be used as an interlayer film for laminated glass as it is, or may be used as an interlayer film for laminated glass after a substrate layer (also called an "additional substrate layer") is additionally stacked.

Namely, the present invention provides an interlayer film having image-carrying laminate 1A for laminated glass, and the interlayer film for laminated glass may consist of image-carrying laminate 1A, or may have another layer such as an additional substrate layer in addition to image-carrying laminate 1A.

The configuration of the additional substrate layer is the same as that of the resin sheet described above, so that the description thereof will be omitted.

In image-carrying laminate 1A, the first resin sheet 10, or the first resin sheet 10 and the second resin sheet 30 may be used as an adhesive layer to adhere image-carrying laminate 1A to other members. Therefore, in the case of image-carrying laminate 1A having the first resin sheet 10 and the second resin sheet 30 as substrate layers, it may be used as an interlayer film for laminated glass as it is. Specifically, image-carrying laminate 1A is disposed between a pair of laminated glass members, and the first resin sheet 10 and the second resin sheet 30 adhere to one and the other of the laminated glass members, respectively, to join the pair of laminated glass members via image-carrying laminate 1A.

Even when image-carrying laminate 1A has the first resin sheet 10 and the second resin sheet 30, an additional substrate layer may be appropriately stacked thereon to obtain a laminate, which can be used as an interlayer film for laminated glass. For example, an additional substrate layer may be stacked on the outer side of one of the first resin sheet 10 and the second resin sheet 30, or additional substrate layers may be stacked on the outer sides of both the first resin sheet 10 and the second resin sheet 30, respectively, and the resulting laminate may be used as an interlayer film for laminated glass.

In the case of image-carrying laminate 1A having only one resin sheet (the first resin sheet 10) as a substrate layer, on the other hand, it is preferable to appropriately stack an additional substrate layer and use the resulting laminate with the stacked additional substrate layer as an interlayer film for laminated glass. In this case, in image-carrying laminate 1A, the additional substrate layer may be stacked on the side opposite from the surface on which the first resin sheet 10 is to be disposed. Specifically, in the first embodiment (Fig. 1), the additional substrate layer may be stacked on image-carrying layer 20.

Even in the case of image-carrying laminate having only one resin sheet (the first resin sheet 10) as a substrate layer, image-carrying laminate 1A may be used as an interlayer film for laminated glass as it is without stacking an additional substrate layer. In this case, for example, image-carrying layer 20 may be disposed only on a portion of one surface of the first resin sheet 10, and the other surface 10B of the first resin sheet 10 may be exposed. The other surface 10B of the first resin sheet 10 and the one surface 10A of the first resin sheet 10 (i.e., the surface opposite from the surface on which image-carrying layer 20 has been disposed) can be allowed to adhere to one laminated glass member and the other laminated glass member, respectively, whereby the two laminated glass members can be appropriately joined by image-carrying laminate 1A serving as an interlayer film for laminated glass.

### [Laminated glass]

Laminated glass contains an interlayer film for laminated glass. Laminated glass generally includes a pair of laminated glass members and an interlayer film for laminated glass disposed between the pair of laminated glass members, and the pair of laminated glass members are joined together via the interlayer film for laminated glass.

The interlayer film for laminated glass used for the laminated glass may consist of the image-carrying laminate as described above, or may be a laminate stacked with another layer such as an additional substrate layer on the image-carrying laminate.

The laminated glass member used for the laminated glass may be a glass plate. The glass plate may be any of inorganic glass and organic glass, and inorganic glass is preferred. Examples of the inorganic glass include, but are not limited to, clear glass, float glass plate, polished glass plate, patterned glass plate, wired glass plate, lined glass plate, and green glass.

The organic glass generally used is what is called resin glass, and examples of such organic glass include, but are not limited to, polycarbonate, an acrylic resin, an acrylic copolymer resin, and a polyester resin.

The two glass plates may be formed of the same material or different materials. For example, one of the two glass plates may be inorganic glass and the other organic glass; however, both of the two glass plates are preferably inorganic glass or organic glass.

The thickness of each glass plate is not particularly limited, and is, for example, approximately 0.1 to 15 mm and preferably 0.5 to 5 mm. The thicknesses of the glass plates may be the same or different from each other, and preferably the same.

A method for producing the laminated glass is not particularly limited. For example, an image-carrying laminate is sandwiched between two laminated glass members, and passed through a pressing roll, or placed in a rubber bag, followed by suction under reduced pressure, to remove air remaining between the two glass members and the resin film. Then, the resultant is subjected to preliminary adhesion at approximately 70 to 110°C to obtain a laminate. Next, the laminate is placed in an autoclave or pressed, to undergo compression-bonding at approximately 120 to 150°C and a pressure of 1 to 1.5 MPa. In such a manner, the laminated glass can be obtained.

In the case in which another resin layer such as an additional substrate layer is stacked on the image-carrying laminate in the laminated glass, the laminated glass may be produced by preliminarily stacking the other layer such as an additional substrate layer on the image-carrying laminate to integrate them, sandwiching the integrated product between two laminated glass members, and carrying out the method as described above.

Alternatively, in the case in which another layer such as an additional substrate layer is stacked on the image-carrying laminate, laminated glass may be produced, not by preliminarily integrating the image-carrying laminate and the other resin layer, but by overlapping them, sandwiching the resultant between two laminated glass members, and carrying out the method as described above. In this case, while the laminated glass is being produced, an interlayer film for laminated glass is also being produced that has the image-carrying laminate and the other layer stacked thereon.

The interlayer film for laminated glass and the laminated glass of the present invention can be used as glass structures such as window glass in various fields, and can be used for vehicle applications such as automobiles, railway vehicles, aircraft, and ships, and for architectural applications, and it is preferable to use them for various vehicle applications such as automobiles. When used for automobile applications, they can be used for any of front glass, side glass, and rear glass.

The interlayer film for laminated glass and laminated glass of the present invention enable a glass structure to carry an image, and are therefore preferably used in applications requiring a higher level of design. For example, when they are used for window glass for automobiles, the window glass can be decorated to match the body design and body color. Also, in architectural applications, the interlayer film for laminated glass and laminated glass are preferably used as decorative glass for exterior or interior use.

In the case of the image-carrying layer containing the light-emitting material as described above, the laminated glass is preferably used together with a light source apparatus that irradiates excitation light. The light source apparatus is not particularly limited, and in the case of the laminated glass used in vehicle applications, the light source apparatus is preferably installed, for example, inside a vehicle. Also, when used in architectural applications, the light source apparatus may be installed inside or outside a building.

### (Second embodiment)

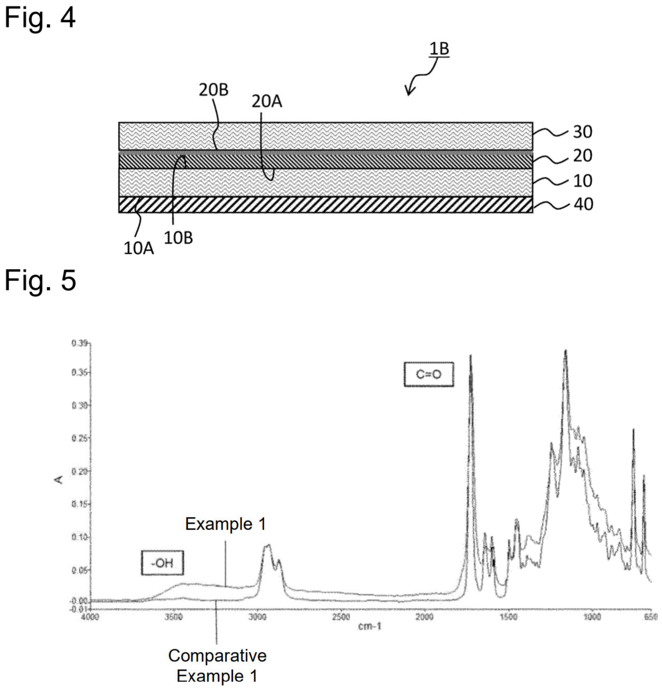

Next, the second embodiment of the present invention will be described in detail. The second embodiment differs from the first embodiment in that, as shown in Fig. 3 and Fig. 4, the image-carrying laminate according to the second embodiment is configured to have a third resin sheet 40 on one surface 10A of the first resin sheet 10 opposite from the other surface 10B thereof on which image-carrying layer 20 is stacked. A difference between the first embodiment and the second embodiment will be described below. Matters for which description will be omitted are the same as that in the first embodiment. In the following description, the same reference sign will be used to designate a member having the same configuration as that in the first embodiment.

Image-carrying laminate 1B according to the second embodiment includes, as shown in Fig. 3 and Fig. 4, the third resin sheet 40 as an outer layer on the first resin sheet 10.

### <First resin sheet>

The first resin sheet 10 in image-carrying laminate 1B according to the second embodiment may be a material that has favorable adhesive strengths to the third resin sheet 40 and image-carrying layer 20 to inhibit interlayer delamination from occurring.

Examples of the first resin sheet 10 in image-carrying laminate 1B include a polyester film, a polyolefin film, a polyimide film, and an epoxy film. Among them, the polyester film is preferable, and among the polyester films, a polyethylene terephthalate (PET) film is more preferable.

The thickness of the first resin sheet 10 is preferably, but not particularly limited to, 0.5 µm or more and 400 µm or less, more preferably 10 µm or more and 300 µm or less, and particularly preferably 50 µm or more and 200 µm or less. The first resin sheet 10 having a thickness equal to or more than the above-described lower limit is likely to function as an adhesive layer. The first resin sheet 10 having a thickness equal to or less than the above-described upper limit can prevent a larger thickness of image-carrying laminate 1B than necessary.

### <Second resin sheet>

The second resin sheet 30 in image-carrying laminate 1B according to the second embodiment can have the same configuration as the second resin sheet 30 in image-carrying laminate 1A according to the first embodiment described above.

### <Third resin sheet>

The third resin sheet 40 may be used as a substrate layer for holding the first resin sheet 10 and image-carrying layer 20. The third resin sheet 40 may also serve as an adhesive layer for allowing image-carrying laminate 1B to adhere to another member such as a glass member.

A resin used for the third resin sheet 40 is preferably any of a thermoplastic resin and a thermosetting resin and more preferably a thermoplastic resin among them.

The third resin sheet 40 containing a thermoplastic resin is likely to function as an adhesive layer and have favorable adhesiveness to a glass plate (glass member).

The thermoplastic resin in the third resin sheet 40 is not particularly limited, and examples thereof include a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. Using these resins facilitates ensuring adhesiveness to a glass plate.

The thermoplastic resins may be used singly or in combination of two or more thereof in each resin layer in the present invention.

Among those described above, at least one selected from the group consisting of the polyvinyl acetal resin, the ethylene-vinyl acetate copolymer resin, the polyurethane resin, and the polyolefin resin is preferred, and the polyvinyl acetal resin is more preferred, and the polyvinyl butyral resin is particularly preferred, in terms of exhibiting excellent adhesiveness to glass in particular when used in combination with a plasticizer.

The thermosetting resin for the third resin sheet 40 is not particularly limited, and examples thereof include an epoxy resin, a phenol resin, a melamine resin, an unsaturated polyester resin, a urea resin, and a silicone resin. The use of these resins is likely to ensure adhesiveness to a glass plate.

### <<Plasticizer>>

In the case of the third resin sheet 40 containing a thermoplastic resin, it preferably further contains a plasticizer. That is, the third resin sheet 40 preferably contains a thermoplastic resin and a plasticizer.

The third resin sheet 40 containing a plasticizer is flexible, and as a result, image-carrying laminate 1B is also flexible. Also, when image-carrying laminate 1B is used as an interlayer film for laminated glass, it enhances the flexibility of laminated glass and the penetration resistance as well. Furthermore, image-carrying laminate 1B can also exhibit high adhesiveness to a glass plate.

In the case of using the polyvinyl acetal resin as a thermoplastic resin, the plasticizer works effectively when contained in the third resin sheet 40. Therefore, the third resin sheet 40 more preferably contains the polyvinyl acetal resin and the plasticizer.

Examples of the plasticizer include organic ester plasticizers such as monobasic organic acid ester and polybasic organic acid ester, as well as phosphorus-based plasticizers such as an organic phosphate-based plasticizer and an organic phosphite-based plasticizer. Of these, the organic ester plasticizer is preferred.

The details of the plasticizers are as described above, and triethylene glycol-di-2-ethylhexanoate (3GO) is particularly suitably used.

The plasticizer content in the third resin sheet 40 is preferably, but not particularly limited to, 10 parts by mass or more and 100 parts by mass or less per 100 parts by mass of the thermoplastic resin. Image-carrying laminate 1B having a plasticizer content of 10 parts by mass or more is moderately flexible. Therefore, using image-carrying laminate 1B as an interlayer film for laminated glass enhances the favorable penetration resistance or other properties of the laminated glass. The plasticizer content of 100 parts by mass or less prevents separation of the plasticizer from the third resin sheet 40. The plasticizer content is more preferably 20 parts by mass or more, still more preferably 30 parts by mass or more, yet still more preferably 35 parts by mass or more, and more preferably 70 parts by mass or less and still more preferably 63 parts by mass or less.

The third resin sheet 40 is mainly composed of a resin, or a resin and a plasticizer, and the total amount of thermoplastic resin and plasticizer in the third resin sheet 40 is usually 70% by mass or more and 100% by mass or less, preferably 80% by mass or more and 100% by mass or less, and more preferably 90% by mass or more and 100% by mass or less, based on the total amount of the resin sheet. However, as will be described later, the third resin sheet 40 generally contains an additive, so that the total amount of thermoplastic resin and plasticizer may be less than 100% by mass.

The third resin sheet 40 of the present invention may also appropriately contain various additives such as a heat shielding agent, an ultraviolet ray absorber, an antioxidant, a light stabilizer, an ultraviolet ray absorber, and an antioxidant.

The thickness of the third resin sheet 40 is not particularly limited, and is, for example, 50 µm or more and 1,000 µm or less, preferably 100 µm or more and 800 µm or less, and more preferably 200 µm or more and 500 µm or less. The third resin sheet 40 having a thickness within the above range can appropriately support the first resin sheet 10 and image-carrying layer 20 by the third resin sheet 40 without a larger thickness of image-carrying laminate 1B than necessary, and also facilitates adhesion of image-carrying laminate 1B to another member such as a laminated glass member.

### [Method for producing image-carrying laminate]

An example of the method for producing an image-carrying laminate 1B according to the second embodiment will be described below.

In the method for producing an image-carrying laminate 1B according to the second embodiment, first, the first resin sheet 10 with the third resin sheet 40 stacked on one surface 10A of the first resin sheet 10 is provided, and printing is carried out on the other surface 10B side thereof with a curable ink, which is then cured to form an image-carrying layer 20. Image-carrying layer 20 may be partially disposed on the other surface 10B of the first resin sheet 10, or may be disposed on the whole of the other surface 10B of the first resin sheet 10. The method of printing with the curable ink is not particularly limited, and examples thereof include screen printing, inkjet printing, flexographic printing, and offset printing, and inkjet printing is preferred among them. In the case of using an ultraviolet ray-curable ink as the curable ink, the ultraviolet ray-curable ink underwent printing for coating is irradiated with ultraviolet rays to be cured to thereby form an image-carrying layer 20.

Next, the second surface 20B of image-carrying layer 20 opposite from the first surface 20A side on which the first resin sheet 10 is stacked, is subjected to surface treatment by the surface treatment process as described above.

In the case of image-carrying laminate 1B configured to include the second resin sheet 30 on the second surface 20B side of image-carrying layer 20, the second resin sheet 30 may be stacked on the second surface 20B side of image-carrying layer 20 after the surface treatment by a surface treatment process.

The method for stacking the second resin sheet 30 is not particularly limited, and any known method may be used. A lamination method may be used. In the lamination method, a thermoplastic resin may be stacked by extrusion on the second surface 20B of image-carrying layer 20 that has been surface treated by a surface treatment process, to thereby form the second resin sheet 30. Alternatively, a thermoplastic resin preliminarily formed into a film may be stacked by pressing or the like on the second surface 20B of image-carrying layer 20 that has been subjected to the surface treatment by a surface treatment process. Any other known lamination methods may be employed.

Proceeding with the steps described above, image-carrying laminate 1B shown in Fig. 3 and Fig. 4 can be obtained.

In the present production method, which includes subjecting a surface of image-carrying layer 20 to surface treatment by a surface treatment process, image-carrying layer 20 has not been caused to suffer interlayer delamination and has favorably maintained the clarity and resolution of an image.

The present production method, which includes forming image-carrying layer 20 by printing, facilitates image depiction in various shapes by image-carrying layer 20, so that an image-carrying laminate 1B with a high design quality can be easily obtained.

The above-described production method is one example for obtaining image-carrying laminate 1B according to the second embodiment, and the method for producing image-carrying laminate 1B according to the second embodiment is not limited to the above-described method.

For example, first, the first resin sheet 10 is provided, and on the other surface 10B side of the first resin sheet 10, printing is carried out with a curable ink, which is then cured to form an image-carrying layer 20. Next, the second surface 20B of image-carrying layer 20 opposite from the first surface 20A side on which the first resin sheet 10 is stacked, is subjected to the surface treatment by a surface treatment process as described above. Next, the third resin sheet 40 is stacked on one surface 10A of the first resin sheet 10. In the case of image-carrying laminate 1B configured to include the second resin sheet 30 on the second surface 20B side of image-carrying layer 20, it is preferable to also stack the second resin sheet 30 on the second surface 20B side of image-carrying layer 20 after surface treatment by a surface treatment process.

Proceeding with the steps described above, image-carrying laminate 1B shown in Fig. 3 and Fig. 4 can be obtained as well.

Also, in one mode of the second embodiment, surface treatment by a surface treatment process may be omitted in the case in which a curable ink to be used contains a component having a hydroxyl group and a carboxyl group to allow the second surface 20B to have an absorption peak at 3,200 to 3,700 cm⁻¹ as measured with a Fourier transform infrared spectrophotometer.

### Examples

The present invention will be described in more detail by way of Examples, but the present invention is not limited to these Examples.

### [Example 1]

### (Forming of image-carrying laminate)

First, four resin films as substrates (thickness 400 µm) were provided for both of the first resin sheet 10 and the second resin sheet 30, each of which was composed of 100 parts by mass of PVB (polyvinyl butyral resin, average degree of polymerization 1,700, amount of hydroxyl group 30.5 mol%, degree of acetylation 1 mol%, degree of acetalization 68.5 mol%) and 30 parts by mass of a plasticizer (3GO: triethylene glycol-di-2-ethylhexanoate).

The whole of the surface of one side of the film substrate serving as one of the four first resin sheets 10 was coated by solid printing with ultraviolet ray-curable inks of four colors by inkjet printing (cyan, magenta, yellow, black, product name "LUS-120", manufactured by Mimaki Engineering Co., Ltd.) and was irradiated with ultraviolet rays at 3 W/cm² to cure the ultraviolet ray-curable ink to thereby form image-carrying layer 20 (thickness 20 µm). Next, the second surface 20B of image-carrying layer 20 opposite from the first surface 20A side thereof on which the first resin sheet 10 was stacked, was subjected to UV ozone treatment (product name "UV Ozone Cleaner," manufactured by NovaScan, Inc.) as surface treatment by a surface treatment process. Thereafter, the film substrate (thickness 400 µm) serving as the second resin sheet 30 provided above was stacked on the second surface 20B side of image-carrying layer 20 that had been surface-treated by the surface treatment process, to obtain an image-carrying laminate 1A having a thickness of 820 µm and the structure shown in Fig. 2.

### (Forming of laminated glass)

The obtained image-carrying laminate 1A (interlayer film for laminated glass) was sandwiched between two pieces of clear glass (15 cm long × 15 cm wide × 2.5 mm thick) to obtain a laminate. This laminate was placed in a rubber bag, followed by degassing for 20 minutes at a vacuum of 2.6 kPa. Then, the laminate in the rubber bag was transferred into an oven while keeping the degassed state, and held at 90°C for 30 minutes to carry out vacuum press for temporary compression bonding. The laminate after the temporary compression bonding was compression bonded for 20 minutes in an autoclave under conditions of 135°C and a pressure of 1.2 MPa to obtain laminated glass.

### [Example 2]

The same procedure as in Example 1 was carried out, except that four resin films as substrates (thickness 400 µm) composed of EVA (ethylene-vinyl acetate copolymer resin, vinyl acetate content 20% by mass) were provided and used for both the first resin sheet 10 and the second resin sheet 30.

### [Example 3]

The same procedure as in Example 1 was carried out, except that four resin films as substrates (thickness 400 µm) composed of 100 parts by mass of a polyolefin resin (product name "PHOTOCAP 35521P HLT," manufactured by STR, Inc.) were provided and used for both the first resin sheet 10 and the second resin sheet 30.

### [Example 4]

The same procedure as in Example 1 was carried out, except that four sheets of resin film substrates (thickness 400 µm) composed of 100 parts by mass of a polyurethane resin (product name "IROGRAN A60 E6038," manufactured by Huntsman Corporation) as the thermoplastic resin were provided and used for both the first resin sheet 10 and the second resin sheet 30.

### [Example 5]

### (Forming of image-carrying laminate)

First, four sheets of PET (polyethylene terephthalate, thickness 100 µm) were provided as the first resin sheets 10. The whole of a surface of each of the four PET sheets provided was coated by solid printing with ultraviolet ray-curable inks of four colors by inkjet printing (cyan, magenta, yellow, black, product name "LUS-120," manufactured by Mimaki Engineering Co., Ltd.) and was irradiated with ultraviolet rays at 3 W/cm² to cure the ultraviolet ray-curable ink to thereby form image-carrying layer 20 (thickness 20 µm). Next, the second surface 20B of image-carrying layer 20 opposite from the first surface 20A side on which the first resin sheet 10 had been stacked was subjected to UV ozone treatment (product name "UV Ozone Cleaner," manufactured by NovaScan, Inc.) as surface treatment by a surface treatment process.

Next, four resin films as substrates (thickness 400 µm) were provided for both the second resin sheet 30 and the third resin sheet 40, each of which was composed of 100 parts by mass of PVB (polyvinyl butyral resin, average degree of polymerization 1,700, amount of hydroxyl group 30.5 mol%, degree of acetylation 1 mol%, degree of acetalization 68.5 mol%) and 30 parts by mass of a plasticizer (3GO: triethylene glycol-di-2-ethylhexanoate). The four second resin sheets 30 provided were stacked on the second surface 20B sides of image-carrying layer 20 coated with color inks, respectively, and the four third resin sheets 40 provided were stacked on the respective one surface 10A sides of the first resin sheets 10 to obtain an image-carrying laminate 1B having a thickness of 920 µm and the structure shown in Fig. 4.

### (Forming of laminated glass)

The obtained image-carrying laminate 1B (interlayer film for laminated glass) was sandwiched between two pieces of clear glass (15 cm long × 15 cm wide × 2.5 mm thick) to obtain a laminate. This laminate was placed in a rubber bag, followed by degassing for 20 minutes at a vacuum of 2.6 kPa. Then, the laminate in the rubber bag was transferred into an oven while keeping the degassed state, and held at 90°C for 30 minutes to carry out vacuum press for temporary compression bonding. The laminate after the temporary compression bonding was compression bonded for 20 minutes in an autoclave under conditions of 135°C and a pressure of 1.2 MPa to obtain laminated glass.

### [Comparative Example 1]

The same procedure as in Example 1 was carried out, except that the surface treatment by a surface treatment process on the second surface 20B of image-carrying layer 20 was omitted.

### [Comparative Example 2]

The same procedure as in Example 5 was carried out, except that the surface treatment by a surface treatment process on the second surface 20B of image-carrying layer 20 was omitted.

### (Evaluation of peak as measured with Fourier transform infrared spectrophotometer (FI-IR))

The second surface 20B of image-carrying layer 20 of the laminated glass obtained in each Example and Comparative Example was checked, according to the following evaluation criteria, whether or not the surface had an absorption peak at 3,200 to 3,700 cm⁻¹ as measured with a Fourier transform infrared spectrophotometer. The evaluation results are shown in Table 1. The measurement conditions for the Fourier transform infrared spectrophotometer (FI-IR) were as follows.

As an example of the measurement results, a chart obtained using a Fourier transform infrared spectrophotometer is shown in Fig. 5, which shows the results when the second surface 20B of image-carrying layer 20 was analyzed that had been formed by curing a cyan ultraviolet ray-curable ink in image-carrying laminates 1A in Example 1 or Comparative Example 1.

### <Evaluation criteria>

OK: an absorption peak is present in a range from 3,200 to 3,700 cm⁻¹.

NOK: No absorption peak is present in a range from 3,200 to 3,700 cm⁻¹.

### <Measurement conditions>

A measurement was made by an ATR method with a Perkin-Elmer FI-IR apparatus attached to a diamond ATR horizontal apparatus. The average spectrum was obtained after four scans in the wavenumber range of 650 to 4,000 cm⁻¹.

### (Evaluation of interlayer delamination upon lamination processing)

The laminated glass obtained in each of Examples and Comparative Examples was checked whether interlayer delamination occurred upon lamination processing, according to the following evaluation criteria. The evaluation results are shown in Table 1.

### <Evaluation criteria>

OK: Delamination was not found between the layers of the obtained laminated glass sample.

NOK: Interlayer delamination was found due to air entered the corner of the obtained laminated glass sample.

### (Evaluation of interlayer delamination after Pummel test (Sekisui method))

The laminated glass obtained in each Example and Comparative Example was adjusted to a temperature of -18°C ± 0.6°C for 16 hours, and the center of this laminated glass (portion having 150 mm long × 150 mm wide) was hit by a hammer with a head of 0.45 kg to crush the glass until the size of the glass became 6 mm or less, and the crushed glass was evaluated on whether or not interlayer delamination was observed, according to the following evaluation criteria. The evaluation results are shown in Table 1.

### <Evaluation criteria>

OK: Delamination was not found at the interlayer between the resin sheet and the image-carrying layer.

NOK: Delamination was found at the interlayer between the image-carrying layer and the second resin sheet of the obtained laminated glass sample.

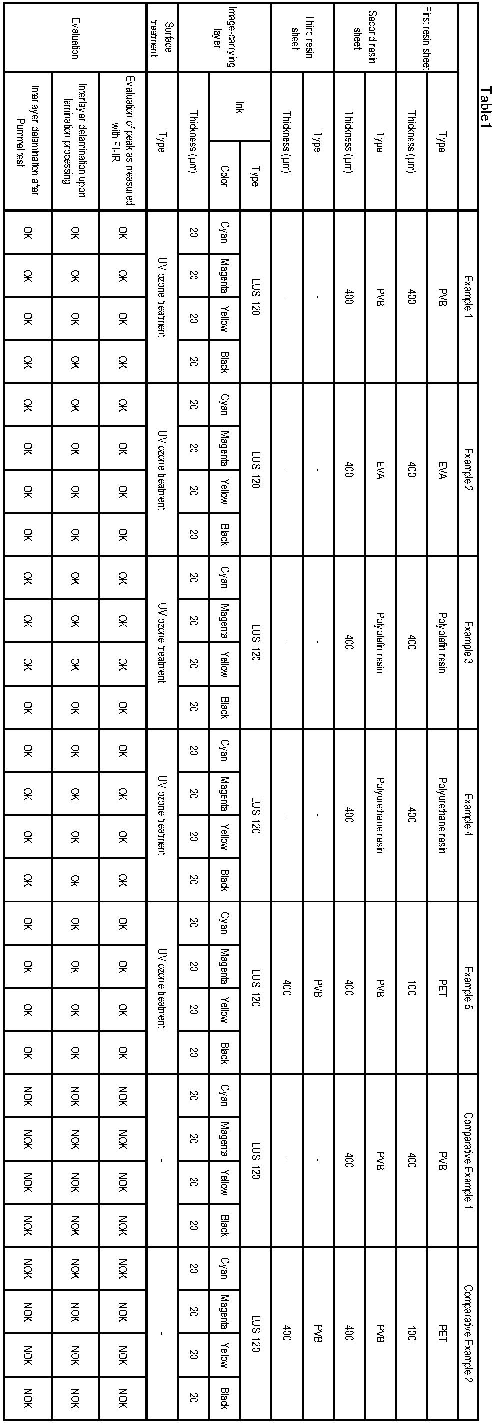

In each of the Examples described above, since the surface treatment was carried out on the surface of the image-carrying layer by the surface treatment process, the surface had an absorption peak at 3,200 to 3,700 cm⁻¹ as measured with a Fourier transform infrared spectrophotometer, and as a result, the image-carrying layer did not suffer interlayer delamination and maintained the favorable image clarity and resolution of an image.

In contrast, in each of Comparative examples, the surface of the image-carrying layer had no absorption peak at 3,200 to 3,700 cm ⁻¹ as measured with a Fourier transform infrared spectrophotometer, and as a result, the image-carrying layer suffered interlayer delamination and did not maintain the clarity and resolution of an image.

### Reference Signs List

1A, 1B image-carrying laminate
10 first resin sheet
20 image-carrying layer
30 second resin sheet
40 third resin sheet

## Claims

1. An image-carrying laminate for carrying an image, comprising:
a first resin sheet; and an image-carrying layer formed of a cured product of a curable ink,
the image-carrying layer having a first surface and a second surface opposite from the first surface, the first resin sheet being stacked on the first surface side of the image-carrying layer, the second surface of the image-carrying layer having been subjected to surface treatment by a surface treatment process.

2. The image-carrying laminate according to claim 1, wherein the surface treatment by the surface treatment process is treatment for enhancing hydrophilicity of the second surface of the image-carrying layer.

3. An image-carrying laminate for carrying an image, comprising:
a first resin sheet; and an image-carrying layer formed of a cured product of a curable ink,
the image-carrying layer having a first surface and a second surface opposite from the first surface, the first resin sheet being stacked on the first surface side of the image-carrying layer, the second surface of the image-carrying layer having an absorption peak at 3,200 to 3,700 cm⁻¹ as measured by a Fourier transform infrared spectrophotometer.

4. The image-carrying laminate according to claim 1 or 3, comprising a second resin sheet laminated on the second surface side of the image-carrying layer.

5. The image-carrying laminate according to claim 1 or 3, wherein the first resin sheet comprises any of a thermoplastic resin and a thermosetting resin.

6. The image-carrying laminate according to claim 1 or 3, wherein the first resin sheet comprises a thermoplastic resin, and the thermoplastic resin is at least one selected from the group consisting of a polyvinyl butyral resin, an ethylene-vinyl acetate copolymer resin, a polyurethane resin, and a polyolefin resin.

7. The image-carrying laminate according to claim 4, wherein the second resin sheet comprises a thermoplastic resin, and the thermoplastic resin is at least one selected from the group consisting of a polyvinyl butyral resin, an ethylene-vinyl acetate copolymer resin, a polyurethane resin, and a polyolefin resin.

8. The image-carrying laminate according to claim 1 or 3, comprising a third resin sheet on a surface of the first resin sheet opposite from a surface of the first resin sheet on which the image-carrying layer is stacked.

9. The image-carrying laminate according to claim 1 or 3, wherein the first resin sheet is at least one selected from the group consisting of a polyester film, a polyolefin film, a polyimide film, and an epoxy film.

10. The image-carrying laminate according to claim 8, wherein the third resin sheet comprises any of a thermoplastic resin and a thermosetting resin.

11. The image-carrying laminate according to claim 8, wherein the third resin sheet comprises a thermoplastic resin, and the thermoplastic resin is at least one selected from the group consisting of a polyvinyl butyral resin, an ethylene-vinyl acetate copolymer resin, a polyurethane resin, and a polyolefin resin.

12. An interlayer film for laminated glass, comprising the image-carrying laminate according to claim 1 or 3.

13. Laminated glass comprising the interlayer film for laminated glass according to claim 12.

14. A method of producing an image-carrying laminate, comprising:
a step of forming an image-carrying layer, the forming step comprising: providing a first resin sheet; carrying out printing with a curable ink on one surface side of the first resin sheet; and curing the curable ink; and
a step of subjecting a second surface of the image-carrying layer to surface treatment by a surface treatment process, the second surface opposite from a first surface of the image-carrying layer on which the first resin sheet is stacked.

15. The method of producing an image-carrying laminate according to claim 14, further comprising a step of stacking a second resin sheet on the second surface side of the image-carrying layer.
